# EUROPEAN PATENT APPLICATION

(11) **EP 3 783 938 A1**
(43) Date of publication of application: **24.02.2021**
(21) Application number: 19315095.0
(22) Date of filing: 19.08.2019
(51) Int. Cl.: H04W 12/06, H04L 29/06, H04W 12/08, G06F 21/31

(54) **A METHOD FOR RESETTING A PERSONAL CODE OF A USER OF A TELECOMMUNICATION TERMINAL AND CORRESPONDING APPLET AND SERVER**

(71) Applicant: Thales Dis France SA, 92190 Meudon (FR)
(72) Inventor: Phan, Ly-Thanh, 13881 Gemenos Cedex (FR); Dany, Vincent, 13881 Gemenos Cedex (FR); Gros, Jean-François, 13881 Gemenos Cedex (FR)
(74) Representative: Milharo, Emilien

(57) **Abstract**

The invention concerns a method for resetting a personal code of a user of a telecommunication terminal cooperating with a secure element, the secure element storing the personal code, called first personal code, the method comprising:
a- Activating FDN and ACL features of the terminal and allowing the terminal to only enter in data mode with an unblocking server;
b- Performing a first mutual authentication between the secure element and the HPLMN of the secure element;
c- Connecting the secure element to the unblocking server;
d- After having verified that the user is entitled to a reset of the first personal code, sending an unblocking code to the secure element along with a second personal code for the user;
e- After having verified that the unblocking code corresponds to an unblocking code stored in the secure element, deactivating FDN and ACL features of the terminal, replacing the first personal code by the second personal code and asking the user to enter the second personal code in the terminal;
f- Performing a second mutual authentication between the secure element and the HPLMN of the secure element.

## Description

The present invention concerns telecommunications and more precisely the resetting of a personal code, generally called a PIN code, by a user of a telecommunication terminal like a smartphone, a PDA or a mobile phone for example.

In conventional cellular telecommunication networks, a secure element, such as a SIM card, a UICC, a e-UICC (embedded UICC) or i-UICC (UICC integrated in a chip of a device) cooperates with the terminal. The terminal can be a handset, a smartphone, a tablet, a watch,... The secure element comprises a subscription profile (programs, files, keys, file structure,...) allowing a subscriber to enter in communication with the network (HPLMN - Home Public Land Mobile Network) of his MNO (Mobile Network Operator). When the device is powered on, it connects to a base station of this MNO, for accessing to Internet, handling calls,...

The invention concerns mobile telecom USIM and OTA product and services. In particular the invention is related to the process of unblocking the USIM after a number of wrong Personal Identification Number (PIN) presentation by a user. The process including the modification of the content of the USIM in order to protect access to the user personal information and to restrict access to specific services, the online user identity verification and over the air remote unblocking of the USIM and automatic resetting the PIN verification process of the USIM. USIM is an acronym for Universal Subscriber Identity Module.

By abuse of language it is said that it is a smart card, improved version of the SIM card, dedicated to 3G telephony. It is also an application stored and run on a platform of the UICC type (for Universal Integrated Circuit Card) as mainly defined by the specifications ETSI TS 102:221 (SIM application), 3GPP TS 31.102 (USIM application) and TS 21.1111 (USIM card). This application is designed to enable subscriber authentication (called user equipment in 3G and 4G standards) when connecting to a UMTS or LTE network, using the IMSI number stored in the card that allows unambiguous identification subscriber and its mobile operator. It includes a set of developments to take into account the new 3G and 4G networks specified by the 3GPP. The problem addressed by the present invention is that in mobile telecom, the content and algorithm of the USIM is protected by a Personal Identification Number (PIN). The correct PIN has to be presented by the legitimate user to the USIM. The USIM verifies that the user's presented PIN is equal to the PIN stored in the USIM. If the values are equal then the USIM grants the terminal access to its contents and allow the authentication process to the network to get access to the full range of subscribed mobile services.

On the other hand, if wrong PIN values are presented several times (typically 3 times), then the USIM is blocked and no access to the contents of the USIM is granted nor authentication to the network is allowed by the USIM.

The only way for the user to unblock the USIM is to present the correct PIN Unblocking Key also called PUK.

This is usually an issue for the user: Whether the user has no access to the PUK stored remotely at the moment of needs or it is complicated to enter the long hexadecimal code.

This in general results in the user needing to find another way to contact a family member or the Customer Care Service to get the PUK value, then entering locally the PUK into the Terminal.

In any cases, the unblocking process cannot be performed remotely and automatically with no user hassle: As the USIM is PIN blocked there is no access to the network. This results also in very bad user experience, driving most users to disable their USIM PIN verification process or use the default PIN set by the mobile operator (0000 in general).

The objective of the invention is to allow remote unblocking of the USIM and resetting of the PIN when a preset number of wrong PIN has been presented to the USIM, while limiting the UE (user equipment) access to specific services and protect the user personal information stored in the USIM.

This objective is fulfilled by the present invention that consists in a method for resetting a personal code of a user of a telecommunication terminal cooperating with a secure element, the secure element storing the personal code, called first personal code, the method comprising:
a- Activating FDN and ACL features of the terminal and allowing the terminal to only enter in data mode with an unblocking server;
b- Performing a first mutual authentication between the secure element and the HPLMN of the secure element;
c- Connecting the secure element to the unblocking server;
d- After having verified that the user is entitled to a reset of the first personal code, sending an unblocking code to the secure element along with a second personal code for the user;
e- After having verified that the unblocking code corresponds to an unblocking code stored in the secure element, deactivating FDN and ACL features of the terminal, replacing the first personal code by the second personal code and asking the user to enter the second personal code in the terminal;
f- Performing a second mutual authentication between the secure element and the HPLMN of the secure element.
   Preferably, step -d- comprises the sending by the user of a desired second personal code to the unblocking server.
   Advantageously, at step -d-, the unblocking server generates an unblocking code from a master key.
   Preferably, at step -a- access to the personal data stored in the secure element is blocked.
   The invention also concerns an applet or an operating system for a secure element cooperating with a telecommunication terminal, the applet comprising instructions for resetting a personal code of a user of the telecommunication terminal, the secure element storing the personal code, the instructions:
   a- Activating FDN and ACL features of the terminal and allowing the terminal to only enter in data mode with an unblocking server;
   b- Performing a first mutual authentication between the secure element and the HPLMN of the secure element;
   c- Connecting the secure element to the unblocking server;
   d- Receiving an unblocking code along with a second personal code for the user;
   e- After having verified that the unblocking code corresponds to an unblocking code stored in the secure element, deactivating FDN and ACL features of the terminal, replacing the first personal code by the second personal code and asking the user to enter the second personal code in the terminal.
   The invention also concerns a server for resetting a personal code of a user of a telecommunication terminal cooperating with a secure element, the secure element storing the personal code, called first personal code, the server being configured for:
   a- Being connected to the secure element;
   b- After having verified that the user is entitled to a reset of the first personal code, sending an unblocking code to the secure element along with a second personal code for the user.

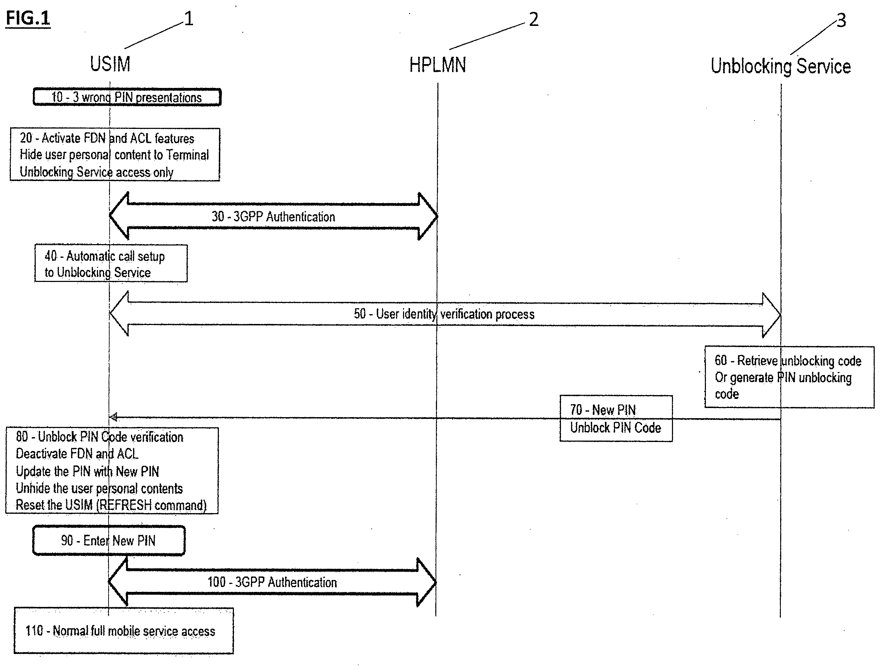

The invention will be better understood by reading the following description of a preferred embodiment of the invention where figure 1 is a flowchart representing this preferred embodiment.

In this figure, three elements are represented: A USIM 1 (secure element), a HPLMN 2 and an unblocking service server 3.

The preferred method of the invention consists in the following steps:
At step 10, during the power-on process of a UE, the user is prompted by the terminal to provide a PIN to be presented to the USIM. But the problem is that the user does not remember or know the right PIN. After (typically) three unsuccessful attempts, the phone is blocked and the user has to enter his PUK code. Since the user does not know generally this PUK code, he cannot use his terminal anymore.

Therefore, according to the invention, an applet (application) is installed in the USIM (or in the operating system) allowing the user to retrieve a new PIN code again, after having identified himself with the unblocking service server 3. This corresponds to a reset of the PIN code.

In the following description, the personal code of the user that has been entered wrongly (e.g. three times in the keyboard of the terminal) is called first personal code.

For that, at step 20, the FDN (Fixed Dialing Number) and ACL (Access Control List) features of the USIM/terminal are activated. The result is that the user will not be able anymore to call numbers that are not in the in the FDN list and send data, except to data to the unblocking service server 3.

It is also advantageous to hide the personal data that are comprised in the USIM (in order to hide the phonebook, called history, stored SMS/MMS of the user for example if the terminal has been lost or stolen). In so far, only a communication between the USIM/terminal and the unblocking service server 3 is allowed.

The activation of the FDN service can be done with at least the remote PIN Unblocking Service dialing number pre-configured by the home network operator, and potentially a user preset dialing number, so that only these numbers can be called. As specified in 3GPP TS 31.102, when FDN service is activated, only the numbers available in the file EF_{FDN} can be called.

Enforcement is performed by the terminal accordingly to 3GPP TS 31.102.

One may activate the APN Control List file (EF_{ACL}) with only the APN value to access the remote PIN Unblocking Service web page. The authorized APN value may be pre-configured by the home operator. Accordingly to 3GPP 31.102, only the APN listed in the USIM elementary file EF_{ACL} can be accessed by the terminal. Enforcement is performed by the Terminal as specified in 3GPP TS 31.102.

One may indicate that only customer service or the user preset number are reachable (e.g. via USIM Toolkit application DISPLAY TEXT and/or MENU SELECTION see 3GPP TS 31.111) It is also possible to setup automatically (via the USIM Toolkit command SETUP CALL by an application in the UICC) a call to one of the numbers in the FDN file or open an browser application towards the PIN Unblocking Service website via the above operator pre-configured APN of EF_{ACL}.

In summary, the FDN and ACL features of the terminal are activated and the terminal is only allowed to enter in data mode with the unblocking server 3.

The PIN number of the secure element is not blocked as in the prior art. This means that the USIM 1 will be able to connect, as usually, to his HPLMN 2 at step 30 for performing a first mutual 3GPP authentication. Thanks to this authentication, the secure element 1 will be able to connect later to the unblocking service server 3 (at step 50).

At step 40, the USIM 1 launches an automatic call setup to the unblocking service server 3 (Unblocking service). The secure element 1 is then connected to the unblocking server 3. At step 50, once the user has access to the remote PIN Unblocking Service (e.g. customer care, online web service) via its UE, the PIN Unblocking Service performs the following steps: It verifies the identity of the caller: e.g. by asking security questions (login, password, passphrase, name of his pet, ...) and optionally asks the user to choose a new PIN (a desired second personal code). This means that after successful user identity verification, the server 3 may prompt the user to provide a new PIN (the user sends a desired second personal code to the unblocking server 3).

Another solution is to generate, at the level of the server 3 a new PIN and communicate it to the verified user.

The generation (step 60) of the PIN unblocking code (PUK) associated with the verified user's USIM 1 can be based on:
- the value of the new PIN;
- and a signature algorithm, for instance consisting in hashing the result of concatenation of the USIM's PUK and the new PIN.

It is also possible to generate an unblocking code from a master key: The PUK may be the result of a cryptographic operation between the master key and a diversified data such as the ICCID or IMSI. It is also possible to generate the PUK completely by the applet / OS based on a challenge / response signed by the server.

At step 70, the server 3 sends the new PIN (second personal code) with the PIN unblocking code (PUK) over the air to the USIM 1. The message may be further integrity and confidentiality protected by e.g. an OTA platform as defined in 3GPP TS 31.115 and TS 31.116.

When the USIM application receives the new PIN and PIN unblocking code, the USIM verifies the integrity and authenticity of the message accordingly to 3GPP TS 31.115 and TS 31.116, and then performs the following verification:
- Generation of the expected PIN unblocking code based on the received new PIN and for instance the above mentioned hashing algorithm and the locally pre-configured PUK;
- Verifies that the received PIN unblocking code is equal to the expected PIN unblocking code.

If above mentioned integrity and authenticity verification is successful, the USIM application (step 80):
- Updates the USIM PIN with the new PIN value;
- Makes the user personal contents available again;
- Requests the terminal to perform a full reset of the UICC via a REFRESH UICC command.

The Terminal then (step 90):
- performs a full reset of the UICC
- prompts the user for the PIN
- and performs the normal USIM activation process as specified in 3GPP TS 31.102

At step 100, the USIM 1 is then able to connect again with his HPLMN 2 (directly or through a VPLMN) and at step 110, the terminal has again full access to his services.

The invention allows the remote unblocking and resetting of the PIN which is not possible with the existing PUK mechanism as described in 3GPP TS 31.102.

The invention is more secure than existing PUK method as there are no more needs to provide the user with a PUK, and thus there is no need to write the PUK on a paper that can be stolen. The invention makes the unblocking process more user friendly and encourages people to set not-easy to guess PIN value.

The invention can make the unblocking process automatic (no customer service operator required) minimizing operational costs.

There is no impact other than on the UICC and the OTA platform (Unblocking service 3).

The invention while providing the described service, protects the user personal information stored in the USIM as long as the PIN has not been unblocked, reset and the new PIN has been presented.

The invention enables the user to access the unblocking service with the device containing the blocked PIN USIM, which provides a much better user experience than existing solutions.

The invention does not require changes on the User Equipment, thus is easily deployable and works readily with all technologies from 2G to 5G.

The invention also concerns an applet or an operating system for a secure element 1 cooperating with a telecommunication terminal, the applet comprising instructions for resetting a personal code of a user of the telecommunication terminal, the secure element 1 storing the personal code, the instructions:
a. Activating FDN and ACL features of the terminal and allowing the terminal to only enter in data mode with an unblocking server 3;
b. Performing a first mutual authentication between the secure element 1 and the HPLMN 2 of the secure element 3;
c. Connecting the secure element 1 to the unblocking server 3;
d. Receiving an unblocking code along with a second personal code for the user;
e. After having verified that the unblocking code corresponds to an unblocking code stored in the secure element 1, deactivating FDN and ACL features of the terminal, replacing the first personal code by the second personal code and asking the user to enter the second personal code in the terminal;
f. Performing a second mutual authentication between the secure element 1 and the HPLMN 2 of the secure element 1 (this is done automatically).

Finally, the invention concerns a server for resetting a personal code of a user of a telecommunication terminal cooperating with a secure element 1, the secure element 1 storing the personal code, called first personal code, the server being configured for:
a- Being connected to the secure element 1;
b- After having verified that the user is entitled to a reset of a first personal code, sending an unblocking code to the secure element 1 along with a second personal code for the user.

## Claims

1. A method for resetting a personal code of a user of a telecommunication terminal cooperating with a secure element (1), said secure element (1) storing said personal code, called first personal code, said method comprising:
a- Activating FDN and ACL features of said terminal and allowing said terminal to only enter in data mode with an unblocking server (3);
b- Performing a first mutual authentication between said secure element (1) and the HPLMN (2) of said secure element (1);
c- Connecting said secure element (1) to said unblocking server (3);
d- After having verified that said user is entitled to a reset of said first personal code, sending an unblocking code to said secure element (1) along with a second personal code for said user;
e- After having verified that said unblocking code corresponds to an unblocking code stored in said secure element (1), deactivating FDN and ACL features of said terminal, replacing said first personal code by said second personal code and asking said user to enter said second personal code in said terminal;
f- Performing a second mutual authentication between said secure element (1) and the HPLMN (2) of said secure element (1).

2. The method according to claim 1, wherein step -d- comprises the sending by said user of a desired second personal code to said unblocking server (3).

3. The method according to claims 1 or 2, wherein at step -d- said unblocking server (3) generates an unblocking code from a master key.

4. The method according to any of the claims 1 to 3 wherein at step -a- access to the personal data stored in said secure element (1) is blocked.

5. An applet or an operating system for a secure element (1) cooperating with a telecommunication terminal, said applet comprising instructions for resetting a personal code of a user of said telecommunication terminal, said secure element (1) storing said personal code, said instructions:
a- Activating FDN and ACL features of said terminal and allowing said terminal to only enter in data mode with an unblocking server (3);
b- Performing a first mutual authentication between said secure element (1) and the HPLMN (2) of said secure element (1);
c- Connecting said secure element (1) to said unblocking server (3);
d- Receiving an unblocking code along with a second personal code for said user;
e- After having verified that said unblocking code corresponds to an unblocking code stored in said secure element (1), deactivating FDN and ACL features of said terminal, replacing said first personal code by said second personal code and asking said user to enter said second personal code in said terminal.

6. A server for resetting a personal code of a user of a telecommunication terminal cooperating with a secure element (1), said secure element (1) storing said personal code, called first personal code, said server being configured for:
a- Being connected to said secure element (1);
b- After having verified that said user is entitled to a reset of a first personal code, sending an unblocking code to said secure element (1) along with a second personal code for said user.
